# EUROPEAN PATENT APPLICATION

(11) **EP 4 286 148 A1**
(43) Date of publication of application: **06.12.2023**
(21) Application number: 21923065.3
(22) Date of filing: 09.11.2021
(51) Int. Cl.: B29L 30/00, B29C 33/02, B29C 35/02

(54) **SIPE BLADE AND TIRE MOLD**

(30) Priority: 27.01.2021 JP 2021010847
(71) Applicant: BRIDGESTONE CORPORATION, Chuo-ku Tokyo 104-8340 (JP)
(72) Inventor: ISHIHARA, Yasuyuki, Tokyo 104-8340 (JP)
(74) Representative: Marks & Clerk LLP
(86) International application number: PCT/JP2021/041149
(87) International publication number: WO 2022/163060

(57) **Abstract**

A sipe blade which is implanted in a base mold and which molds a sipe in a tire is provided with a first blade molded by pressing a plate member and a second blade having a thickness greater than a thickness of the first blade. The second blade is provided with a contact portion which extends along an outer periphery of the first blade implanted in the base mold and with which one molding surface of the first blade comes in contact along a peripheral edge portion of the first blade, or provided with a fitting portion which accommodates the peripheral edge portion of the first blade and with which both molding surfaces of the first blade come in contact.

## Description

### TECHNICAL FIELD

The present invention relates to a sipe blade for forming sipes in a tire and a tire mold.

### BACKGROURND

Conventionally, in tires, by forming narrow grooves (so-called sipes), which have narrower widths than groove widths of main grooves, in tread blocks demarcated by the main grooves extending in the circumferential direction and in the width direction, a gripping force on ice is improved by controlling a block rigidity or increasing edges. Normally, a mold for molding such tires is manufactured by a casting process, however, if a part, which is used to mold such sipes as described above, especially sipes having a groove width of about 2 mm or less, is formed integrally with another part by casting in, there is a great danger of breakage of that part due to loads repeatedly applied at the time of tire molding and demolding. Thus, to cope with this, a thin member (a sipe blade) having been separately manufactured by press molding a metal plate or the like made of a steel material with higher strength, is casted in to the above-mentioned part.

### CITATION DOCUMENT

### Patent Document

Patent Document 1: Japanese Unexamined Patent Application Publication No. 2017-94539

### SUMMARY OF THE INVENTION

### Technical Problem

As described above, by press-molding the steel material of the sipe blade, a certain degree of freedom is obtained in setting of the shape of the sipe. On the other hand, since the sipe blade obtained by press-molding the steel material cannot be largely changed, in terms of the thickness thereof, there is a problem that the degree of freedom in changing the shape of the groove width, namely, partially widening the groove width of the sipe and so on, is low.

It is therefore an object of the present invention to provide a sipe blade and a tire mold capable of improving the degree of freedom in setting the sipe shape in a tire while assuring a repeated fatigue life of the sipe blade.

### Solution to Problem

As a configuration of a sipe blade for solving the above-described problem, a sipe blade which is implanted in a base mold and which molds a sipe in a tire is configured to include a first blade molded by pressing a plate member and a second blade having a thickness greater than a thickness of the first blade, in which the second blade is provided with a contact portion which extends along an outer periphery of the first blade implanted in the base mold and with which one molding surface of the first blade comes in contact along a peripheral edge portion of the first blade, or provided with a fitting portion which accommodates the peripheral edge portion of the first blade and with which both molding surfaces of the first blade come in contact.

Further, as a configuration of a tire mold for solving the above-described problem, a tire mold is provided with the sipe blade having the above-described configuration.

It should be noted that the above-described summary of the invention does not enumerate all the necessary features of the present invention, and respective configurations constituting the feature groups can also be the invention.

### BRIEF DESCRIPTION OF DRAWINGS

Fig. 1 is a perspective view of a main part of a tire mold.
Figs. 2A and 2B are a plan view and a cross-sectional view of a main part of a base mold.
Figs. 3A to 3C are a plan view of a sipe blade and a plan view of a first blade.
Figs. 4A to 4C are a plan view and a cross-sectional view of a second blade.
Figs. 5A to 5C are an exploded perspective view and an assembly view of another sipe blade.
Figs. 6A to 6C are diagrams illustrating another embodiment of the base mold.
Figs. 7A to 7D are diagrams illustrating another embodiment of the sipe blade.
Figs. 8A and 8B are diagrams illustrating another embodiment of the sipe blade.
Figs. 9A to 9c are an exploded view and an assembly view of the sipe blade.
Figs. 10A and 10B are diagrams illustrating another embodiment of the sipe blade.
Fig. 11 is a plan view of the first blade and a plan view of the second blade.
Figs. 12A to 12 C are diagrams illustrating a relationship between the first blade and the second blade.

### DESCRIPTION OF EMBODIMENTS

Hereinafter, the present invention will be explained in detail through embodiments, however, the embodiments described below do not limit the inventions set forth in the claims, and not all of combinations of the features described in the embodiments are necessarily essential to the solving means of the invention.

### [Embodiment 1]

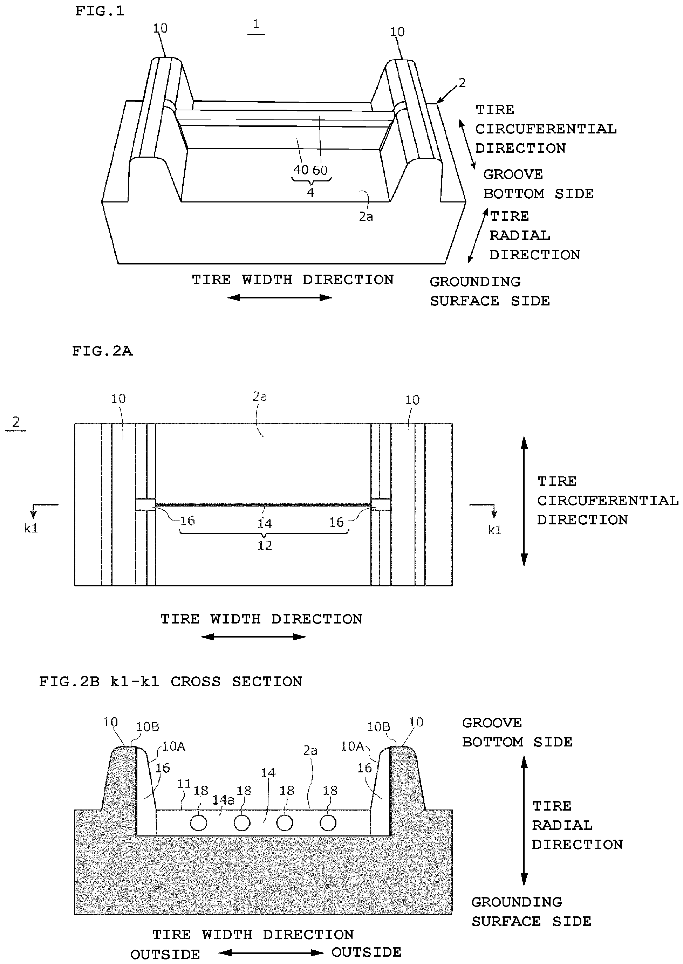

Fig. 1 is a perspective view of a main part of a tire mold according to Embodiment 1. Figs. 2A and 2B are a plan view and a cross-sectional view of a main part of a base mold. In the following description, directions are specified based on a direction of a tire to be molded by the tire mold 1, and described as a tire radial direction, a tire width direction and a tire circumferential direction, and a groove bottom side, a grounding surface side and so on with respect to the tire radial direction, the tire width direction and the tire circumferential direction.

As illustrated in Fig. 1, a tire mold 1 according to the present embodiment is provided with a base mold 2 and a sipe blade 4. The tire mold 1 is manufactured by integrating the base mold 2 and the sipe blade 4 respectively manufactured by separate processes.

As illustrated in Figs. 1 and 2(A) and 2(B), the base mold 2 is a mold as a base into which the sipe blade 4 is implanted and is formed by, for example, casting, additive manufacturing method, machining and so on. In the base mold 2, concaves and convexes for molding a molded item such as a tread block, and a blade attachment portion 12 for attaching the sipe blade 4, are formed on a molding surface 2a. The molded item is provided with convex portions, such as a plurality of circumferential direction groove molding portions 10 for molding circumferential direction grooves as the molded item of the tire and a plurality of width direction groove molding portions (not shown in the figures) for molding width direction grooves. In the tire, circumferential direction grooves and width direction grooves are molded by the circumferential direction groove molding portion 10 and the plurality of width direction groove molding portions, and tread blocks and so on demarcated by the circumferential direction grooves and the width direction grooves are molded.

The blade attachment portion 12 extends along the tire width direction from one of the adjacent circumferential direction groove molding portions 10, 10 so as to reach the other one of the adjacent circumferential direction groove molding portions 10, 10. The blade attachment portion 12 is configured with a first blade attachment portion 14 for attaching the first blade 40 and a second blade attachment portion 16 for attaching the second blade 60. The first blade 40 and the second blade 60 configure the sipe blade 4.

The first blade attachment portion 14 is provided to linearly extend so as to connect between the circumferential direction groove molding portions 10; 10. The first blade attachment portion 14 is formed as a groove that is recessed in a slit shape into a grounding surface molding portion 11, which molds a grounding surface of the tire, of the molding surface 2a of the base mold 2. The first blade attachment portion 14 is provided, along the tire width direction, with a plurality of convex portions 18 for fixing the first blade 40. The convex portion 18 is formed so as to swell in a spherical shape from a groove wall 14a forming the first blade attachment portion 14.

The second blade attachment portion 16 is provided in the circumferential direction groove molding portion 10. The second blade attachment portion 16 is recessed toward the outside in the tire width direction from a groove wall molding portion 10A, which forms the groove wall of the circumferential direction groove of the circumferential direction groove molding portion 10 in the tire, extends in the tire radial direction from a groove bottom molding portion 10B, which forms the groove bottom of the circumferential direction groove of the circumferential groove molding portion 10 in the tire, and is formed as a concave portion recessed more than the grounding surface molding portion 11 configuring the molding surface 2a.

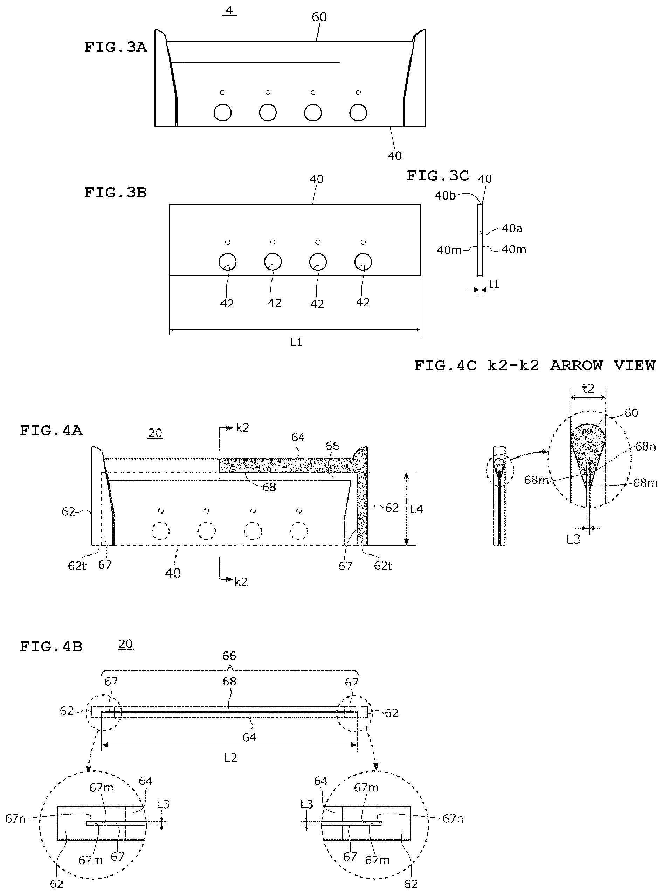

Figs. 3A and 3B are a plan view of the sipe blade 4 and a plan view of the first blade 40. As illustrated in Fig. 1 and Fig. 3A, the sipe blade 4 is provided with the first blade 40 and the second blade 60 and is attached to the base mold 2 described above. Specifically, the first blade 40 is attached to the first blade attachment portion 14 of the blade attachment portion 12 and the second blade 60 is attached to the second blade attachment portion 16 of the blade attachment portion 12, respectively. By combining the first blade 40 and the second blade 60, one sipe is molded in the tire.

As illustrated in Fig. 3B, the first blade 40 according to the present embodiment is formed in a one-side-long rectangular planar shape by machining such as pressing a metal plate having a predetermined thickness t1, for example. The thickness t1 of the metal plate is set so as to obtain a sipe of a desired groove width in the tire after molding.

The first blade 40 is provided with a plurality of circular engagement holes 42 that penetrate in a plate thickness direction and that engages with the convex portion 18 provided in the first blade attachment portion 14. The first blade 40 is attached to the base mold 2 at a predetermined position in such a manner as not to fall off by engaging the engagement hole 42 with the convex portion 18 provided in the first blade attachment portion 14.

Figs. 4A to 4C are a plan view and a cross-sectional view of the second blade 60. As illustrated in Fig. 4A, the second blade 60 is provided with strut portions 62; 62 extending along a pair of short sides facing each other in the first blade 40 and a coupling portion 64 which extends along one long side of the first blade 40 and couples the strut portions 62; 62. The second blade 60 is formed, for example, by the additive manufacturing method which is different from the manufacturing method used for the first blade 40. The thickness t2 of the second blade 60 is set to be greater than the thickness t1 of the first blade 40. The thickness t2 of the second blade 60 refers to all of the strut portions 62; 62 and the coupling portion 64 that configure the second blade 60.

The strut portions 62, 62 are attached to the second blade attachment portions 16, 16 of the base mold 2, respectively, and, as illustrated in Fig. 1, are formed to have an outer shape that is integral with the circumferential direction groove molding portions 10; 10 in the base mold 2. The coupling portion 64 is bridged across the strut portions 62; 62 so as to extend a position shallower than the groove bottom formed in the tire by the circumferential direction groove molding portions 10; 10. As illustrated in Fig. 4C, the coupling portion 64 is formed in a teardrop shape, one side of which is tapered off in a cross-sectional view orthogonal to the extension direction.

As illustrated in Figs. 4A and 4B, the second blade 60 is provided with an accommodation groove 66 that extends continuously from one strut portion 62 through the coupling portion 64 to the other strut portion 62 and that accommodate a pair of short sides and a long side of the first blade 40. The accommodation groove 66 functions as a fitting portion into which the outer peripheral portion of the first blade 40 is fitted.

The accommodation groove 66 is configured with strut portion grooves 67; 67 formed in the strut portion 62 and a coupling portion groove 68 formed in the coupling portion 64. The strut portion grooves 67; 67 formed in each of the strut portions 62; 62 face each other and extend parallel to each other from one end 62t in the extension direction of each of the strut portions 62; 62 to the coupling portion 64 along the extension direction of the strut portion 62. The coupling portion groove 68 extends along the extension direction of the coupling portion 64 and is connected to the strut portion grooves 67; 67 provided in each of the strut portions 62; 62.

The groove width L3 of the accommodation groove 66 is so formed that the short sides of the first blade 40 can be inserted from one end 62t; 62t sides of the strut portion grooves 67; 67 in a manner that the first blade 40 can be slidable toward the coupling portion 64, and that one long side of the first blade 40 can be inserted into the coupling portion groove 68. In other words, by fitting the first blade 40 into the accommodation groove 66 of the second blade 60, the first blade 40 and the second blade 60 are integrated as one sipe blade 4.

Hereinafter, an explanation is given as to the relationship between the second blade 60 and the first blade 40 when the second blade 60 and the first blade 40 are integrated.

As illustrated in the enlarged views of Figs. 4B and 4C, for example, the strut portion grooves 67; 67 and the coupling portion groove 68 are each formed into a box shape opening at one end thereof as seen in the cross-sectional view orthogonal to the extension direction. As illustrated in Fig. 4B, the length L2 between groove bottoms 67n; 67n of the opposing strut portion grooves 67; 67 provided in the respective strut portions 62 of the second blade 60 is set slightly longer than the length L1 of the long side of the first blade 40, and the groove width L3, which is the distance between groove walls 67m; 67m of the strut portion grooves 67, 67, is set slightly wider than the thickness t1 of the first blade 40. As such, the dimensions are set so as to have the gap that allows the sliding as described above.

As illustrated in Fig. 4C, with respect to the second blade 60, the groove width L3, which is the distance between groove walls 68m; 68m forming the coupling portion groove 68, is set slightly wider than the thickness t1 of the first blade 40. Further, the distance L4 from one end 62t to the groove bottom 68n is so set that, when the outer peripheral surface (plate thickness portion) 40a of one long side of the first blade 40 reaches the groove bottom 68n of the coupling portion groove 68 of the second blade 60, the outer peripheral surface 40a of the other long side (long side not accommodated in the coupling portion groove 68) becomes flush with one end 62t of the strut portion 62.

As described above, the sipe blade 4 is inserted into the blade attachment portion 12 of the base mold 2, for example, in the state in which the first blade 40 is combined with the second blade 60, and configures a part of the tire mold 1. In the state of being attached to the base mold 2, the sipe blade 4 can change the groove width, in the tire radial direction, of one sipe when the tire is molded, as the first blade 40 and the coupling portion 64 of the second blade 60, which have different thicknesses, are exposed between the circumferential direction groove molding portions 10; 10.

In this way, namely, it is possible to mold a narrow groove extending in the tire radial direction from the grounding surface of the tire by the first blade 40 which is thin in the thickness, and mold a wide groove having a wide groove width by the second blade 60 which is greater in the thickness than that of the first blade 40 on the groove bottom side of this narrow groove. By molding the sipe in this manner, water entering into the narrow groove from the grounding surface side can be efficiently drained from the wide groove on the groove bottom side to the circumferential direction groove.

In this way, by using a member, which is formed by pressing a plate member, for the portion of the sipe where the narrow groove is molded, and by forming, by the additive manufacturing method, the portion where the wide groove is molded, advantages of each manufacturing method can be utilized and the durability of the sipe blade 4 can be improved. In other words, if the sipe blade for molding the narrow groove is formed by the additive manufacturing method, the durability is degraded, however, this can be prevented by using a plate member.

### [Embodiment 2]

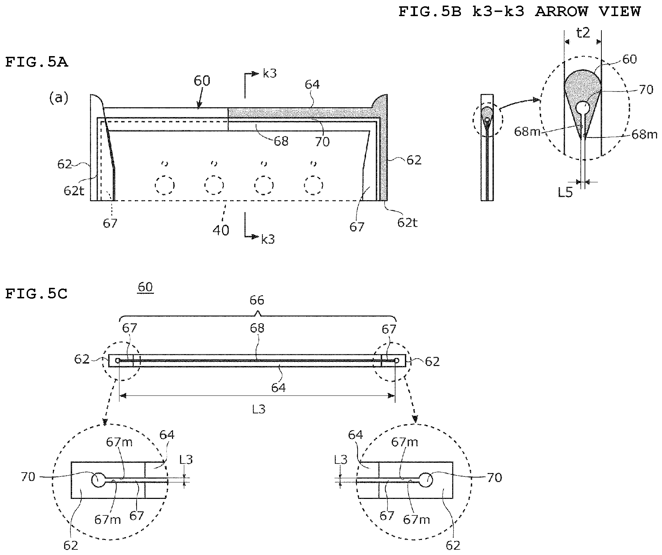

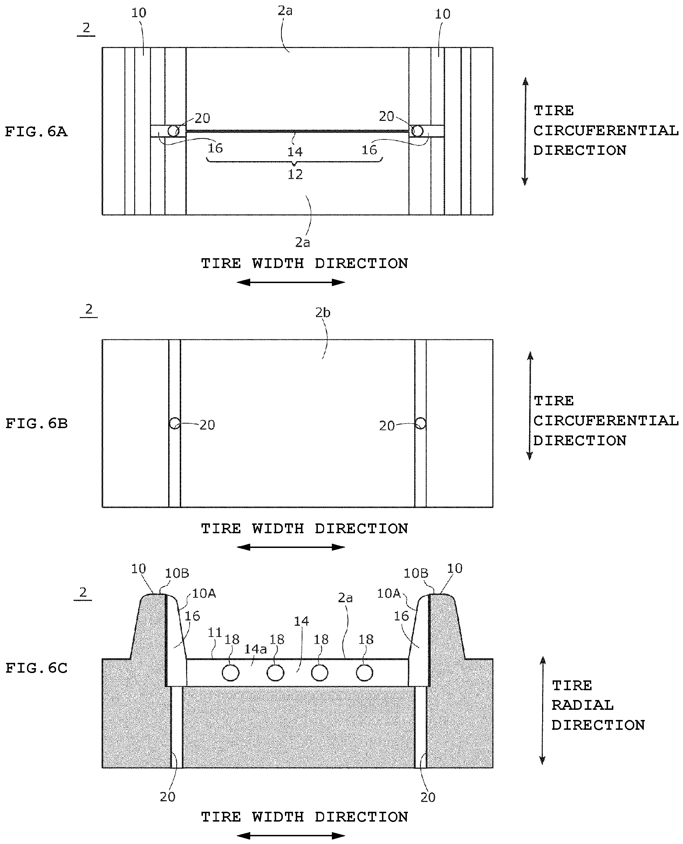

Figs. 5A to 5C are diagrams illustrating another embodiment of the sipe blade 4. Figs. 6A to 6C are diagrams illustrating another embodiment of the base mold 2. With respect to the above-described Embodiment 1, it has been described that the outer periphery of the first blade 40 is fitted into the accommodation groove 66 of the second blade 60. However, as illustrated in Figs. 5A to 5C, a vent passage 70 that makes it possible to ventilate air may be provided in the accommodation groove 66. Hereinafter, another embodiment of the sipe blade 4 will be explained using Figs. 5A to 5C and 6A to 6C. As described above, the second blade 60 can be easily manufactured using the additive manufacturing method.

The sipe blade 4 according to the present embodiment differs from the aforementioned sipe blade 4 in that the sipe blade 4 according to the present embodiment is provided with the vent passage 70 that makes it possible to exhaust air intervening between the tire mold 1 and a green tire during tire molding. As illustrated in Figs. 5A and 5B, the vent passage 70 extends along the accommodation groove 66 so as to form the groove bottom of the accommodation groove 66 that continuously extends from one strut portion 62 of the second blade 60 through the coupling portion 64 to the other strut portion 62.

Since the accommodation groove 66 is formed by the additive manufacturing method and the first blade 40 is formed by pressing the plate member, the surface roughness differs from each other. More specifically, the surface of the first blade 40 is smoother than the surface roughness (the visible roughness inherent to the additive manufacturing method) of the second blade 60 formed by the additive manufacturing method. Due to this difference in the surface roughness, a gap is formed between the first blade 40 and the second blade 60, which allows air to flow into the vent passage 70. This gap may be utilized as an introduction path to the vent passage 70.

In the case of configuring the sipe blade 4 in this manner, as illustrated in Figs. 6A to 6C, it is desirable to provide, in the base mold 2, vent holes 20 that penetrate to the second blade attachment portion 16 to which the strut portions 62; 62 of the second blade 60 are attached, and to the back surface 2b of the base mold 2. By configuring the base mold 2 in this manner, air intervening between the green tire and the molding surface 2a can be efficiently discharged when molding the tire, thus it is unnecessary to provide the vent hole in another part of the base mold 2. In addition, with this configuration, air can be discharged from the vent hole 20 provided in the base mold 2. Further, because the gap formed by the difference in the surface roughness is such a degree to which rubber hardly enters, not only the air can be discharged through the sipe blade 4, but also spews (molding mark) are not molded on the surface of the tire. Thus, the appearance of the tire after molding can be improved.

### [Embodiment 3]

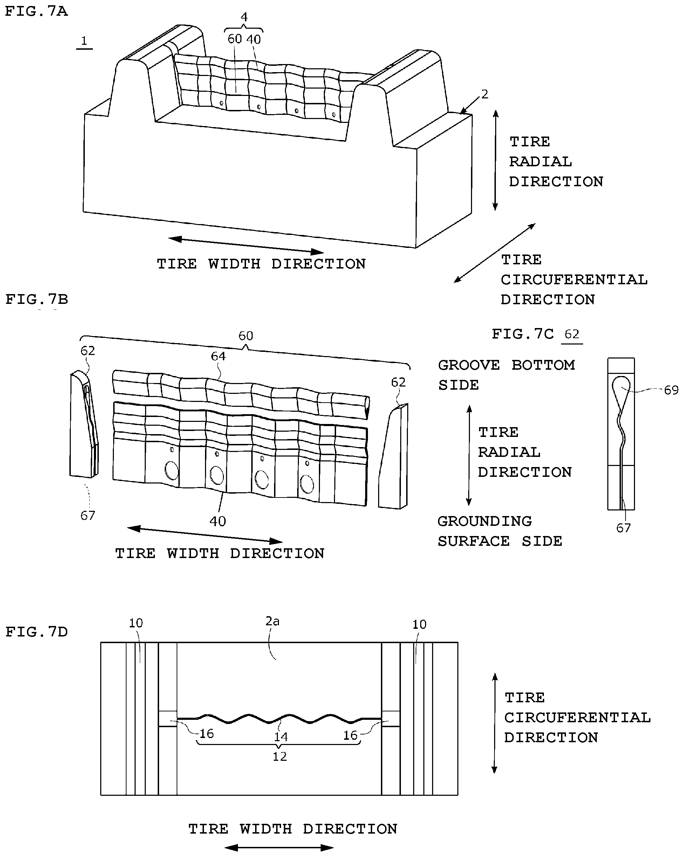

Figs. 7A to 7D are diagrams illustrating another embodiment of the sipe blade 4. In the above-described Embodiments 1 and 2, it has been explained that the first blade 40 is a one-side-long flat rectangle plate, it is not limited thereto. As illustrated in Figs. 7A and 7B, the first blade 40 may be formed to be a so-called 3D sipe having concaves and convexes in the tire circumferential direction and in the tire radial direction.

The second blade 60 may be formed by the additive manufacturing method to have the support portions 62; 62 and the coupling portion 64 as separate members, as illustrated in Fig. 7B, without integrating the support portions 62; 62 and the coupling portion 64 unlike in the above-described Embodiments 1 and 2. In this case, as illustrated in Fig. 7C, it is desirable to form, in each strut portion 62, a strut portion groove 67 into which the short side of the first blade 40 is inserted, and a coupling portion insertion concave portion 69 into which the end portion of the coupling portion 64 can be inserted. Furthermore, as illustrated in Fig. 7D, the base mold 2 may be formed with a first blade attachment portion 14 in correspondence to concaves and convexes formed in the first blade 40.

### [Embodiment 4]

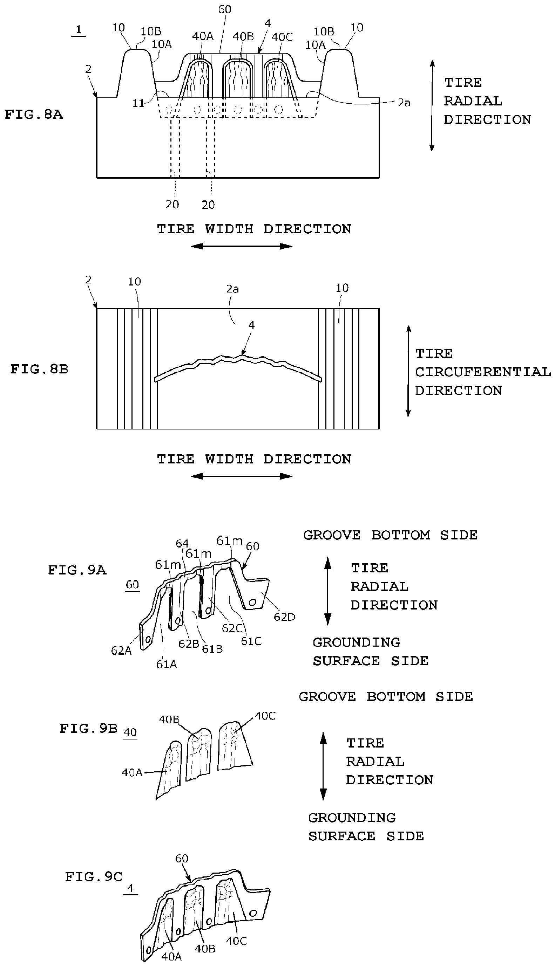

Figs. 8A and 8B are diagrams illustrating another embodiment of the sipe blade 4. Figs. 9A to 9C are an exploded view and an assembly view of the sipe blade 4. The first blade 40 configuring the sipe blade 4 is not limited to one first blade 40 as shown in the above-described Embodiments 1 to 3, but, as illustrated in Figs. 8A and 8B and Figs. 9B and 9C, may be configured by a plurality of first blades 40A to 40C. As illustrated in Fig. 8B, the first blades 40A to 40C are arranged so that the sipe blade 4 takes an arc shape. Namely, the sipe blade 4 shown in Embodiment 4 extends in the arc shape between the circumferential direction groove molding portions 10; 10.

As illustrated in Figs. 9A to 9C, the second blade 60 is provided to be put on the first blades 40A to 40C attached to the base mold 2, and is integrated with the first blades 40A to 40C as the sipe blade 4. The second blade 60 is attached to the first blades 40A to 40 C exposed from the base mold 2, and to the base mold 2 from the standing direction of the first blades 40A to 40C. The second blade 60 is provided with a plurality of openings 61A; 61B; 61C for, when attached to the base mold 2, exposing the molding surfaces 40m; 40m of the first blades 40A to 40C attached to the base mold 2 while surrounding the outer periphery of the first blades 40A to 40C.

As illustrated in Fig. 9A, the second blade 60 is formed with a strut portion 62 A that rises up between one of the circumferential groove molding portions 10 and the first blade 40A, a strut portion 62B that rises up between the first blades 40 A and 40 B, a strut portion 62 C that rises up between the first blades 40B and 40C, a strut portion 62D that rises up between the first blade 40C and the other one of the circumferential groove molded portions 10, and the coupling portion 64 that connects tip ends of the strut portions 62A to 62D rising up from the base mold 2. In this embodiment, the second blade 60 is formed so as not to be included in the circumferential direction groove molding portions 10; 10. That is, the second blade 60 is formed so that the strut portions 62A and 62D come in contact with the groove wall molding portions 10A of the circumferential groove molding portions 10; 10.

In the second blade 60, groove-shaped accommodation grooves (corresponding to the above-described accommodation groove 66) extending along the extension direction of the plate thickness surface 61m and into which the outer peripheries of the first blades 40A to 40C can be inserted, are formed in the plate thickness surface 61m forming the openings 61A; 61B; 61C. The sipe blade 4 may be formed as shown in this Embodiment 4.

Incidentally, it should be noted that the thicknesses of the first blades 40A to 40C may be set appropriately, namely, may be set to be the same or may be set to be different for each blade or may be set such that two of the first blades may be set to have the same thickness and the remaining one may be set to have a different thickness. Even when the thicknesses of the first blades 40A to 40C are changed as described above, by forming the second blade 60 by the additive manufacturing method, it is possible to easily change the groove width for accommodating the first blades 40A to 40C and form the groove.

### [Embodiment 5]

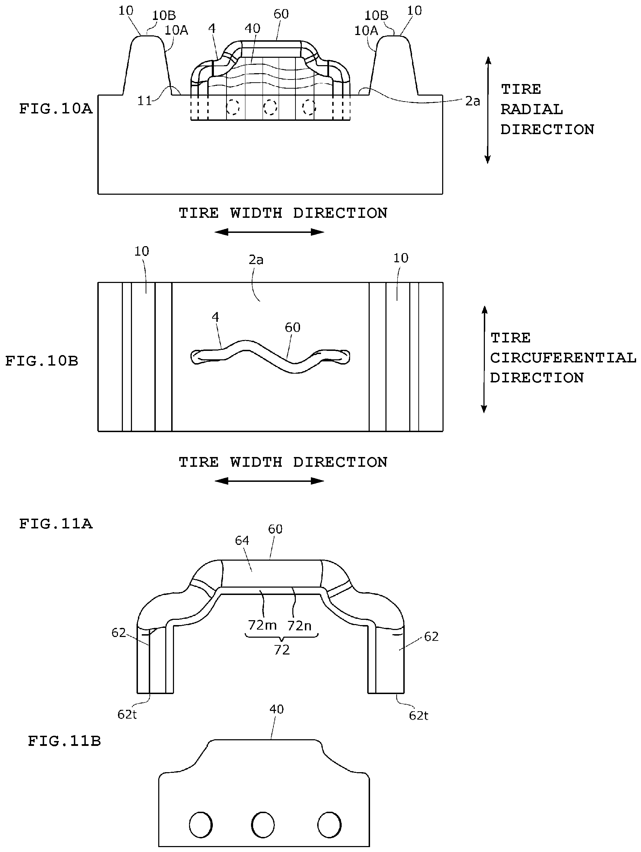

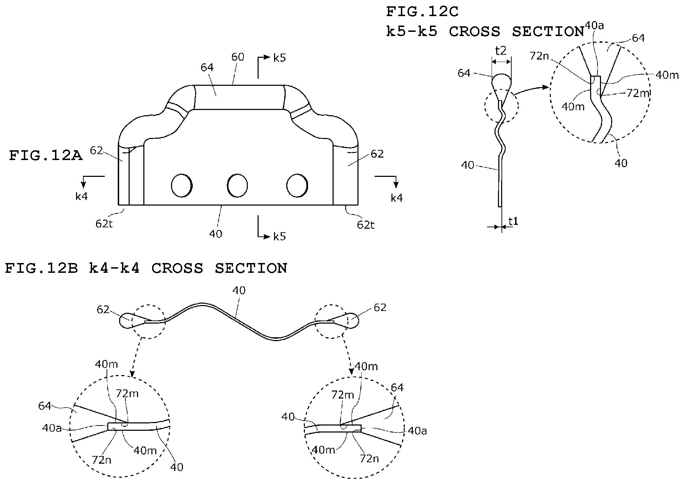

Figs. 10A and 10B are diagrams illustrating another embodiment of the sipe blade 4. Fig. 11 is a plan view of the first blade 40 and the second blade 60. Figs. 12A to 12C are diagrams illustrating a relationship between the first blade 40 and the second blade 60.

In the above-described Embodiments 1 to 4, it has been explained that the sipe blade 4 extends so as to reach between the circumferential direction groove molding portions 10; 10, however, it is not limited thereto. As illustrated in Figs. 10A and 10B, the sipe blade 4 may be formed so as to extend in the tire width direction without reaching between the circumferential direction groove molding portions 10; 10. By configuring the sipe blade 4 in this manner, sipes that do not open in the circumferential direction groove may be formed on the tire.

The sipe blade 4 according to Embodiment 5 is provided in such a manner that the second blade 60 comes in contact with the first blade 40. That is, in the above-described Embodiments 1 to 4, it has been explained that the second blade 60 is formed so as to support the molding surfaces 40m; 40m of the first blade 40 by the pair of groove walls 66m: 60m that form the accommodation groove 66. However, as illustrated in Figs 12A to 12C, the second blade 60 may be formed so that a step portion 72 is provided and one molding surface 40m of the first blade 40 comes in contact with the step portion 72.

As illustrated in Fig. 11, for example, the step portion 72 is provided so as to extend along the outer periphery of the first blade 40 in such a manner as to extend from one end 62t of one of the strut portions 62 of the second blade 60 to one end 62t of the other one of the strut portions 62 via the coupling portion 64. In other words, the step portion 72 is formed in place of the accommodation groove 66 of Embodiments 1 to 4. The step portion 72 is provided with an abutment wall 72m against which the molding surface 40m of the first blade 40 abuts when the first blade 40 and the second blade are attached to the base mold 2, and an opposing wall 72n that opposes to the outer peripheral surface 40a of the first blade 40. The opposing wall 72n may be formed so as to have a predetermined gap relative to the outer peripheral surface 40a of the first blade 40.

By forming the opposing wall 72n so as to have the predetermined gap relative to the outer peripheral surface 40a of the first blade 40, the opposing wall 72n may be made movable with respect to the second blade 60 when an external force acts on the first blade 40. Namely, because it is possible to be displaced relative to the second blade 60 when the tire mold 1 is demolded from the tire, for example, occurrence of defects such as damaging the tire when demolding can be suppressed and the force acting on the first blade 40 can be released, it is possible to prevent unnecessary deformation of the first blade 40 and improve the durability of the sipe blade 4.

In the case of setting different thicknesses to the sipe blade 4, by combining the first blade 40 and the second blade 60 that are different in the thickness to form one sipe blade 4 for molding the tire, and by molding the narrow groove in the tire by the first blade 40 and by molding a groove, having a wide groove width, on the groove bottom side of the sipe by the second blade 60 having the thickness greater than that of the first blade 40, it is possible to improve, while gaining an edge effect on ice and snow by the portion molded by the first blade 40, the performance of drainage of water entered into the groove by the portion molded by the second blade 60.

As explained above using each of Embodiments 1 to 5, by configuring the sipe blade 4 that molds one sipe (narrow groove) in the tire, with two different materials, which are: the first blade 40 that is formed by pressing the metal plate; and the second blade 60 that is formed by the additive manufacturing method and that molds the wide groove in the sipe, it is also possible to maintain the durability of the sipe blade 4 while maintaining the degree of freedom of design in the sipe formation.

It should be noted that the number of parts configuring the sipe blade 4 and the shape of the parts configuring the sipe blade 4 are not limited to those shown in each of the above-described Embodiments, and may be changed appropriately.

For example, in setting the sipe blade 4, like the second blade 60, by forming a part of the sipe blade by the additive manufacturing method, it is possible to maintain the degree of freedom in setting the shape. In addition, by utilizing a press-molded metal plate, like the first blade 40, for the part where the strength is insufficient (the portion where the thickness is desired to be reduced) when formed by the additive manufacturing method, even in the case of molding a groove width of about 0.2 mm, for example, it is possible to prevent breakage at the time of demolding, and maintain the durability.

In other words, it is possible to provide a durable sipe blade and a tire mold while utilizing the superiority of the degree of freedom in forming the sipe on the tire by the additive manufacturing method.

Incidentally, in the above description, it has been explained that the second blade 60 having a thickness greater than that of the first blade 40 is formed by the additive manufacturing method, however, it may be manufactured by precision casting or machining in a process different from forming of the base mold, for example.

Further, it has been explained that, in Embodiment 2, the vent passage 70 is provided in the second blade 60 and the vent hole 20 is provided in the base mold 2 so as to be communicated with the vent passage 70. However, in a case in which the vent passage 70 is not provided in the second blade 60 (for example, like in Embodiment 1 and Embodiments 3 to 5), it is desirable to provide the vent hole 20 in the base mold 2 in such a manner that the vent hole 20 opens to the accommodation groove 66 opened at one end 62t of each strut portion 62 of the second blade 60 attached to the base mold 2. As described above, the first blade 40 is formed by pressing the plate member, and the second blade 60 is formed by the additive manufacturing method. For this reason, the surface of the first blade 40 is smoother than the surface roughness (the visible roughness inherent to the additive manufacturing method) of the second blade 60 formed by the additive manufacturing method. Because a gap is formed between the first blade 40 and the second blade 60 due to this difference in the surface roughness, by utilizing this gap as a vent passage, air can be discharged from the vent hole 20 provided in the base mold 2. In addition, since the gap formed by the difference in the surface roughness is such a degree to which rubber hardly enters, it has an advantage that molding marks such as spews are less likely to remain in the tire after molding.

It should be noted that the manufacturing method of the tire mold is not limited to attaching the sipe blade 4 to the blade attachment portion 12 provided in the base mold 2, as described above. The sipe blade 4 may be embedded and integrated by casting in or the like, for example, when casting the base mold 2.

As explained above, a sipe blade which is implanted in a base mold and which molds a sipe in a tire is so configured that the sipe blade includes a first blade molded by pressing a plate member and a second blade having a thickness greater than a thickness of the first blade, in which the second blade is provided with a contact portion which extends along an outer periphery of the first blade implanted in the base mold and with which one molding surface of the first blade comes in contact along a peripheral edge portion of the first blade, or provided with a fitting portion which accommodates the peripheral edge portion of the first blade and with which both molding surfaces of the first blade come in contact. With this configuration, it is possible to improve the degree of freedom in setting of the sipe shape and, even for the sipe blade having a special shape, it is possible to manufacture the sipe blade with a repetitive fatigue life without a practical problem.

Further, by configuring such that a part of the second blade is included in a part of the molded item to be molded in the tire by the base mold, it is possible to improve the durability due to the undercut shape caused by a 3D bent shape of the sipe blade.

Further, by configuring such that a gap, which is generated in the contact portion where the first blade and the second blade come in contact or which is generated in the fitting portion, is communicated with the vent hole provided in the base mold, air can be discharged through the gap generated in the contact portion or in the fitting portion of the second blade. Therefore, it is unnecessary to provide the vent hole separately at another position of the base mold 2, and it is possible to suppress the occurrence of spews during tire molding.

Further, by providing the second blade with a groove that is communicated with the vent hole and extends along the contact portion where the first blade and the second blade come in contact or along the fitting portion, it is possible to discharge more of the air. It is also possible to further suppress the occurrence of spews during tire molding.

Further, by configuring such that a tire mold is provided with the sipe blade according to any of claims 1 to 6, the durability of the tire mold can be improved.

### REFERENCE SIGN LIST

1: Tire mold, 2: Base mold, 4: Sipe blade,
20: Vent hole, 40: First blade, 60: Second blade, 66: Accommodation groove, 70: Vent passage.

## Claims

1. A sipe blade which is implanted in a base mold and which molds a sipe in a tire, comprising:
a first blade molded by pressing a plate member; and
a second blade having a thickness greater than a thickness of the first blade,
wherein the second blade is provided with:
a contact portion which extends along an outer periphery of the first blade implanted in the base mold and with which one molding surface of the first blade comes in contact along a peripheral edge portion of the first blade, or
a fitting portion which accommodates the peripheral edge portion of the first blade and with which both molding surfaces of the first blade come in contact.

2. The sipe blade according to claim 1, wherein a part of the second blade is included in a part of a molded item to be molded in the tire by the base mold.

3. The sipe blade according to claim 1 or 2, wherein a gap, which is generated in the contact portion where the first blade and the second blade come in contact or which is generated in the fitting portion, is communicated with a vent hole provided in the base mold.

4. The sipe blade according to claim 3, wherein the second blade is provided with a groove which is communicated with the vent hole and extends along the contact portion where the first blade and the second blade come in contact or along the fitting portion.

5. A tire mold comprising the sipe blade according to any one of claims 1 to 4.
